# EUROPEAN PATENT SPECIFICATION

(11) **EP 0 554 840 B1**
(45) Date of publication and mention of the grant of the patent: **06.12.1995**
(21) Application number: 93101590.3
(22) Date of filing: 02.02.1993
(51) Int. Cl.: B60T 13/10

(54) **A master cylinder for a motor-vehicle braking system**
Hauptzylinder für ein Bremssystem eines Motor-Fahrzeuges
Cylindre principal pour un système de frein d'un véhicule automobile

(30) Priority: 04.02.1992 IT TO920088
(43) Date of publication of application: 11.08.1993
(73) Proprietor: FIAT AUTO S.p.A., 10135 Torino (IT)
(72) Inventor: Gandiglio, Romolo, I-10020 Cambiano (Torino) (IT)
(74) Representative: Marchitelli, Mauro

(56) References cited:
- DE-A- 2 129 073
- DE-A- 3 215 266
- DE-A- 3 600 729
- DE-A- 3 925 466

## Description

The present invention relates to a master cylinder for a motor-vehicle braking system, of the type proposed in Italian patent application T91A000638 filed by the present Applicant on 7.8.1991 and published after the priority date of this application.

The object of the present invention is to improve the master cylinder proposed previously by providing it with a particularly simple and functional device for assisting braking.

In order to achieve this object, the subject of the invention is a master cylinder for a motor-vehicle braking system comprising:
- a body,
- first and second main pistons which are slidable in the body and are operatively connected to a brake pedal in order to operate first and second braking circuits of the motor vehicle, respectively,
- resilient means operatively interposed between a wall of the body and the main pistons for biasing the latter towards a rest position,
- first and second pressure chambers which are associated with the first and second main pistons respectively, each of which can also communicate with the respective braking circuit and, when the respective piston is in its rest position, with an exhaust reservoir,
in which the two pressure chambers and the respective operating pistons are disposed in parallel,
characterized in that the master cylinder also comprises:
a rod which is slidable in the body and is connected rigidly to a shank of the brake pedal,
a common member for operating the two main pistons, which is slidable in the body and has an annular recess in its face which faces the brake pedal,
a rubber ring which is mounted in the annular recess, the shank of the brake pedal having an end surface which is urged against a first portion of the exposed face of the rubber ring,
an axially-slidable obturator ring associated with the operating member,
auxiliary resilient means for urging the obturator ring against a second portion of the exposed face of the rubber ring,
the operating member defining an auxiliary pressure chamber which is in communication both with a compressed-air supply and with the atmosphere by means of a passage controlled by the obturator ring which can move, against the action of the auxiliary resilient means, until it closes the passage, as a result of a deformation of the rubber ring which occurs when the brake pedal is urged against the rubber ring, so as to pressurise the auxiliary pressure chamber so that the operating member acts on the two main pistons, assisting the force transmitted by the brake pedal to the operating member by means of the rubber ring.

The member for operating the two main pistons preferably has a plate having two seats with spherical profiles which house two correspondingly-shaped push-rods carried by the respective ends of the two main pistons, the plate in turn having a spherical-profiled bearing surface which engages a corresponding surface on the operating member.

By virtue of this characteristic, the thrust produced by the brake pedal is distributed correctly to the two main pistons under all operating conditions.

Further characteristics and advantages of the invention will become clear from the description which follows with reference to the appended drawings, provided purely by way of non-limiting example, in which:
Figure 1 is a longitudinal sectional view of a master cylinder according to the invention, taken on the line I-I of Figure 2,
Figure 2 is section taken on the line II-II of Figure 1,
Figure 3 is a view of the detail indicated by the arrow III-III in Figure 2, on an enlarged scale,
Figure 4 is a section taken on the line IV-IV of Figure 2, on an enlarged scale,
Figure 5 is a section taken on the line V-V of Figure 1,
Figure 6 is a section taken on the line VI-VI of Figure 1, and
Figure 7 is a section taken on the line VII-VII of Figure 1.

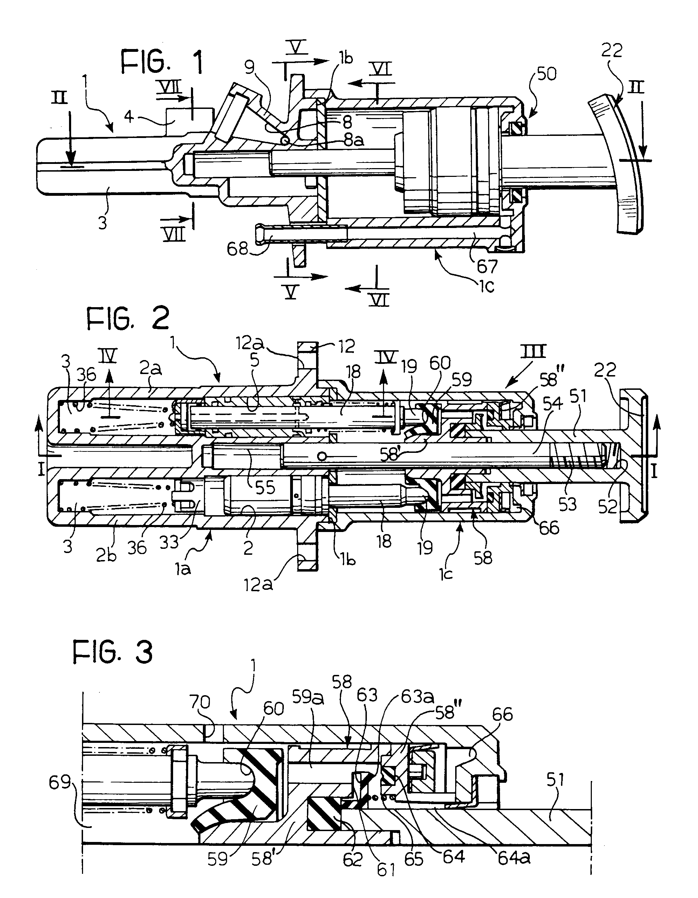

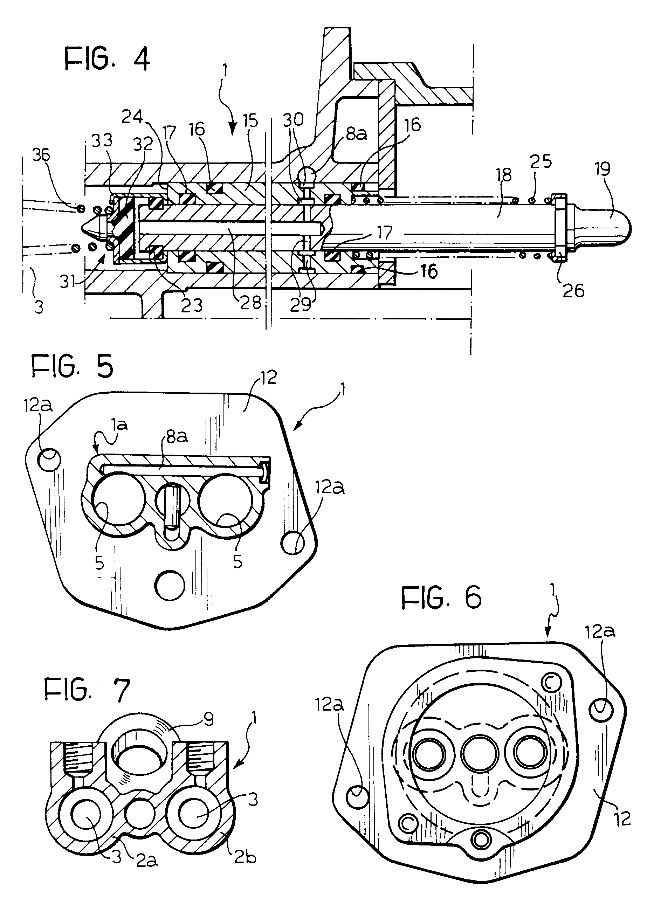

With reference to the drawings, the steel or light-alloy body of a master cylinder for a motor-vehicle braking system including first and second braking circuits (not shown), each associated with two of the four wheels of the motor vehicle, is generally indicated 1. As can clearly be seen in Figure 2, the body 1 includes two parallel sections 2a, 2b having cavities 5 which define two pressure chambers 3 for communicating, by means of two outlet connectors 4 (Figures 1, 7), with the two braking circuits, respectively.

In the embodiment illustrated, the body 1 includes a first element 1a in which the two cylindrical cavities 5 constituting the chambers 3 are formed and a second, cup-shaped element 1c, the mouth of which can be connected to the end portion of the element 1a. The two elements 1a, 1b are fixed together by means of screws which engage holes 1 in juxtaposed lugs 1d (Fig. 6) forming parts of both elements. The element 1a also has a flange 12 with holes 12a for the engagement of screws for fixing the body 1 to the structure of the motor vehicle.

The element 1a of the body 1 also includes an integral conical orifice 9 for the snap-engagement of a connector which forms part of a reservoir of plastics material (not visible in the drawings) for topping up the liquid in the braking circuit, of the type illustrated in the Applicant's prior application identified above. With reference to Figure 1, the conical duct 8 in the orifice 9 opens into a transverse duct 8a (Figures 1, 5) which in turn communicates with the two cylindrical cavities 5 defining the chambers 3.

Two steel bushes 15 are fixed within the two cylindrical cavities 5 (Figure 4). Sealing rings 16 are interposed between the bushes 15 and the wall of the body 1. Two rods 18, constituting the pistons for operating the two braking circuits of the motor vehicle, are slidable in the two bushes 15 with the interposition of sealing rings 17. The ends of the two rods 18 which face a brake pedal 22 have end push-rods 19 with spherical profiles.

The opposite end of each rod 18 carries a resilient ring 23 which is biased towards an end surface 24 of the bush 15 by a helical spring 25 interposed between the rear end of each bush 15 and a collar 26 associated with the push-rod end 19 of each piston 18.

Each rod 18 has an axial hole 28 which serves to keep the respective pressure chamber 3 in communication with the orifice 8 connected to the reservoir for the liquid of the braking circuit, through radial and circular passages 29, 30. The front end of each rod 18 is associated with a valve 31 which cuts off the communication between the pressure chamber 3 and the supply reservoir when the respective piston is moved away from its rest position, towards which it is biased by the spring 25. The valve 31 comprises a face-sealing obturator constituted by a rubber disc 32 facing the opening of the axial hole 28 in the rod 18. The rubber disc 32 is guided within a cage 33 (see Figures 4 and Figure 2) associated with the end face of the piston 18. The cage 33 is kept in abutment against the end surface 24 of the bush 15 by a conical helical spring 36 which is interposed between the cage 33 and the end of the chamber 3. In the rest position, the obturator 32 is spaced from the end of the rod 18 so that there is communication between the pressure chamber 3 and the hole 28 in the rod 18 and, consequently, the supply reservoir 11. In this condition, the two braking circuits are at rest. When the pistons 18 are moved towards the left (with reference to the drawings), in the manner which will be described below, the obturators 32 close the openings of the holes 28 so that, when the rods 18 move further, they overcome not only the action of the springs 25 but also that of the springs 36.

The structure described above is substantially similar to that of the device which is the subject of the present Applicant's prior application identified above.

According to the present invention, the master cylinder also has a device, generally indicated by 50, for assisting the braking action.

The brake pedal 22 has a shank 51 with a blind hole 52 into which the end 53 of a rod 54, which is slidable in a cylindrical cavity 55 in the body of the master cylinder, is screwed (in the embodiment illustrated) or snap-engaged.

An operating member 58 in the form of a piston, slidable on the rod 54, is also guided for sliding in the cylindrical cavity of the element 1c of the body 1. The operating member 58 includes a first element 58', and a second element 58'', fixed thereto. The element 58' has a bearing surface with a spherical profile which is engaged by a correspondingly profiled surface of a plate 59 which has two seats 60 for the push-rods 19 of the pistons 18, the seats having spherical profiles corresponding to those of the push-rods 19.

With reference to Figure 3, the element 58' of the operating member 58 has an annular recess 61 on its face which faces the brake pedal 22, for housing a rubber ring 62. A first portion of the exposed face of the rubber ring 62, that is, the face of the ring which faces the brake pedal 22, is acted on by the end surface of the rod 51 of the pedal, and a second portion thereof is acted on by an obturator ring 63 which is slidable on the rod 51. The obturator ring 63 is interposed axially between the elements 58' and 58'' of the operating member 58. A helical spring 65 interposed between the obturator ring 63 and the element 58'' holds the obturator ring 63 against the rubber ring 62.

The element 58'' defines, with the end wall of the element 1c, an auxiliary pressure chamber 66 which communicates with a connector 68 through passages 67 in the element 1c (Figure 1). The connector 68 is intended to be connected, by means of a flexible tube (not shown), to a compressed-air supply, for example, a compressed-air accumulator supplied by a compressor driven by an electric motor or by the engine of the motor vehicle.

When the obturator ring 63 is in the rest position shown in Figure 3, the compressed air which reaches the interior of the auxiliary pressure chamber 66 through the connector 68 and the passage 67 passes from the chamber 66 through axial passages 64a and 58a into the chambers 69 (Figure 3) of the two pistons 18, from which it can escape to the atmosphere through holes 70 in the wall of the body of the device.

When the brake pedal 22 is depressed, it exerts a force on the end push-rods 19 of the two pistons 18 by means of the rubber ring 62, the operating member 58 and the plate 59. The first movement of the pedal 22, however, presses the shank 51 against the rubber ring 62. The ring is deformed but its volume remains constant, thus causing a rearward movement of the obturator ring 63, against the action of the helical spring 65, to a position in which a circular end edge 63a of the obturator ring 63 contacts a sealing ring 64 of the element 58'' so as to break the communication between the pressure chamber 66 and the atmopshere. The chamber 66 is thus pressurised and causes the member 58 to move towards the left (with reference to Figure 3 ), thus assisting the braking action.

During the braking, the spherical contact of the push-rods 19 against the plate 59 enables the thrust to be distributed correctly to both the pistons 18 in all operating conditions.

## Claims

1. A master cylinder for a motor-vehicle braking system comprising:
- a body (1) ,
- first and second main pistons (18) which are slidable in the body (1) in order to operate first and second braking circuits of the motor vehicle,
- resilient means (25) operatively interposed between a wall of the body (1) and the main pistons (18) for biasing the latter towards a rest position,
- first and second pressure chambers (3) which are associated with the first and second main pistons (18), respectively, each of which can also communicate with the respective braking circuit and, when the respective piston (18) is in its rest position, with an exhaust reservoir,
in which the two pressure chambers (3) and the respective operating pistons (18) are disposed in parallel,
characterized in that the master cylinder also comprises:
a rod (54) which is slidable in the body (1) and is connected rigidly to a shank (51) of the brake pedal (22),
a common member (58) for operating the two main pistons (18), which is slidable in the body (1) and has an annular recess (61) in its face which faces the brake pedal (22),
a rubber ring (62) which is mounted in the annular recess (61), the shank (51) of the brake pedal having an end surface which is urged against a first portion of the exposed face of the rubber ring (62),
an axially-slidable obturator ring (63) associated with the operating member (58),
auxiliary resilient means (65) for urging the obturator ring (63) against a second portion of the exposed face of the rubber ring (62),
the operating member (58) defining an auxiliary pressure chamber (66) which is in communication both with a compressed-air supply (68) and with the atmosphere by means of a passage controlled by the obturator ring (63) which can move, against the action of the auxiliary resilient means (65), until it closes the passage, as a result of a deformation of the rubber ring (62) which occurs when the brake pedal (22) is urged against the rubber ring, so as to pressurise the auxiliary pressure chamber (66) so that the operating member (58) acts on the two main pistons (18), assisting the force transmitted by the brake pedal (22) to the operating member (58) by means of the rubber ring (62).

2. A master cylinder according to Claim 1,
characterized in that the operating member (58) has a plate (59) having two seats (60) with spherical profiles which house two correspondingly-shaped end push-rods (19) carried by the respective ends of the two main pistons (18), the plate (59) in turn having a spherical-profiled bearing surface which engages a corresponding surface on the operating member (58).

3. A master cylinder according to Claim 2,
characterized in that the operating member (58) is in the form of a piston which is slidable on the rod (54) of the brake pedal (22) and is also slidable in the body (1).

4. A master cylinder according to Claim 3,
characterized in that the obturator ring (63) has a circular end edge (63a) which cooperates with a sealing ring (64) carried by the operating member (58).

## Patentansprüche

1. Hauptzylinder für das Bremssystem eines Kraftfahrzeugs, wobei der Zylinder enthält:
einen Körper (1),
einen ersten und zweiten Hauptkolben (18), die im Körper (1) verschiebbar sind, um einen ersten beziehungsweise zweiten Bremskreis des Kraftfahrzeugs zu betätigen,
eine Federeinrichtung (25), die betriebsmäßig zwischen einer Wand des Körpers (1) und den Hauptkolben (18) angeordnet ist, um diese zu einer Ruhestellung vorzuspannen,
eine erste und zweite Druckkammer (3), die dem ersten beziehungsweise zweiten Hauptkolben (18) zugeordnet sind, von denen jede auch mit dem jeweiligen Bremskreis und mit einem Ablaßbehälter in Verbindung treten kann, wenn sich der entsprechende Kolben (18) in seiner Ruhestellung befindet,
wobei die beiden Druckkammern (3) und die entsprechenden Arbeitskolben (18) parallel angeordnet sind,
dadurch gekennzeichnet, daß der Hauptzylinder weiters enthält:
eine Stange (54), die im Körper (1) verschiebbar und mit einem Schaft (51) des Bremspedals (22) starr verbunden ist,
ein gemeinsames Element (58), um die beiden Hauptkolben (18) zu betätigen, das im Körper (1) verschiebbar ist und eine ringförmige Ausnehmung (61) in jener Fläche besitzt, die dem Bremspedal (22) gegenüberliegt,
einen Gummiring (62), der in der ringförmigen Ausnehmung (61) angebracht ist, wobei der Schaft (51) des Bremspedals eine Stirnfläche besitzt, die gegen einen ersten Teil der freiliegenden Fläche des Gummirings (62) gedrückt wird,
einen axial verschiebbaren Verschlußring (63), der dem Betätigungselement (58) zugeordnet ist,
eine Hilfsfedereinrichtung (65), um den Verschlußring (63) gegen einen zweiten Teil der freiliegenden Fläche des Gummirings (62) zu drücken,
wobei das Betätigungselement (58) eine Hilfsdruckkammer (66) bildet, die sowohl mit einer Druckluftquelle (68) als auch mit der Außenluft über einen Kanal in Verbindung steht, der mit dem Verschlußring (63) gesteuert wird, der sich gegen die Wirkung der Hilfsfedereinrichtung (65) bewegen kann, bis er den Kanal durch eine Verformung des Gummirings (62) verschließt, die dann auftritt, wenn das Bremspedal (22) gegen den Gummiring gedrückt wird, um die Hilfsdruckkammer (66) unter Druck zu setzen, so daß das Betätigungselement (58) auf die beiden Hauptkolben (18) wirkt, wodurch die vom Bremspedal (22) auf das Betätigungselement (58) durch den Gummiring (62) übertragene Kraft unterstützt wird.

2. Hauptzylinder gemäß Anspruch 1, dadurch gekennzeichnet, daß das Betätigungselement (58) eine Platte (59) besitzt, die zwei Auflageflächen (60) mit kugelförmigem Umriß besitzt, die zwei entsprechend geformte Endschubstangen (19) aufnehmen, die von den entsprechenden Enden der beiden Hauptkolben (18) getragen werden, wobei die Platte (59) ihrerseits eine kugelförmige Auflagefläche besitzt, die in eine entsprechende Fläche auf dem Betätigungselement (58) eingreift.

3. Hauptzylinder gemäß Anspruch 2, dadurch gekennzeichnet, daß das Betätigungselement (58) die Form eines Kolbens besitzt, der auf der Stange (54) des Bremspedals (22) sowie weiters im Körper (1) verschiebbar ist.

4. Hauptzylinder gemäß Anspruch 3, dadurch gekennzeichnet, daß der Verschlußring (63) eine kreisförmige Endkante (63a) besitzt, die mit einem Dichtungsring (64) zusammenwirkt, den das Betätigungselement (58) trägt.

## Revendications

1. Maître-cylindre pour circuit de freinage de véhicule à moteur, comprenant :
- un corps (1),
- un premier et un second piston principaux (18) qui peuvent coulisser dans le corps (1) pour la commande d'un premier et d'un second circuit de freinage du véhicule à moteur,
- un dispositif élastique (25) placé entre une paroi du corps (1) et les pistons principaux (18) afin que ceux-ci soient rappelés vers une position de repos,
- une première et une seconde chambre de pression (3) associées au premier et au second piston principaux (18) respectivement, chacune d'elles pouvant aussi communiquer avec le circuit respectif de freinage et, lorsque le piston respectif (18) est dans sa position de repos, avec un réservoir d'évacuation,
dans lequel les deux chambres de pression (3) et les pistons respectifs de manoeuvre (18) sont montés en parallèle,
caractérisé en ce que le maître-cylindre comporte aussi :
une tige (54) qui peut coulisser dans le corps (1) et qui est raccordée rigidement à une barre (51) de la pédale de frein (22),
un organe commun (58) de manoeuvre des deux pistons principaux (18), qui peut coulisser dans le corps (1) et qui a une cavité annulaire (61) à sa face tournée vers la pédale de frein (22),
un anneau de caoutchouc (62) monté dans la cavité annulaire (61), la barre (51) de la pédale de frein ayant une surface d'extrémité repoussée contre une première partie de la face exposée de l'anneau de caoutchouc (62),
un anneau obturateur (63) qui peut coulisser axialement, associé à l'organe de manoeuvre (58),
un dispositif élastique auxiliaire (65) destiné à rappeler l'anneau obturateur (63) contre une seconde partie de la face exposée de l'anneau de caoutchouc (62),
l'organe de manoeuvre (58) délimitant une chambre auxiliaire de pression (66) qui communique à la fois avec l'alimentation en air comprimé (68) et avec l'atmosphère par un passage commandé par l'anneau obturateur (63) qui peut se déplacer, malgré l'action du dispositif élastique auxiliaire (65), jusqu'à ce qu'il ferme le passage, du fait de la déformation de l'anneau de caoutchouc (62) qui se produit lorsque la pédale de frein (22) est repoussée contre l'anneau de caoutchouc, si bien que la chambre auxiliaire de pression (66) est mise sous pression et que l'organe de manoeuvre (58) agit sur les deux pistons principaux (18) et accroît la force transmise par la pédale de freinage (22) à l'organe de manoeuvre (58) à l'aide de l'anneau de caoutchouc (62).

2. Maître-cylindre selon la revendication 1, caractérisé en ce que l'organe de manoeuvre (58) a une plaque (59) ayant deux sièges (60) de profil sphérique qui logent les deux tiges-poussoirs (19) dont les extrémités ont une forme correspondante et qui sont portées par les extrémités respectives des deux pistons principaux (18), la plaque (59) ayant à son tour une surface d'appui de profil sphérique qui coopère avec une surface correspondante de l'organe de manoeuvre (58).

3. Maître-cylindre selon la revendication 2, caractérisé en ce que l'organe de manoeuvre (58) est sous forme d'un piston qui peut coulisser sur la tige (54) de la pédale de frein (22) et qui peut coulisser dans le corps (1).

4. Maître-cylindre selon la revendication 3, caractérisé en ce que l'anneau obturateur (63) a un bord d'extrémité circulaire (63a) qui coopère avec un anneau d'étanchéité (64) porté par l'organe de manoeuvre (58).
